# EUROPEAN PATENT SPECIFICATION

(11) **EP 1 121 197 B1**
(45) Date of publication and mention of the grant of the patent: **16.04.2003**
(21) Application number: 99945814.4
(22) Date of filing: 29.09.1999
(51) Int. Cl.: B01J 20/24, B01J 20/32, C09K 3/18

(54) **ABSORBENT AND TIME RELEASE MATERIAL**
ABSORPTIONSMITTEL MIT VERZÖGERTER ABGABE
MATERIAU ABSORBANT ET A LIBERATION DANS LE TEMPS

(30) Priority: 15.10.1998 CA 2250339
(43) Date of publication of application: 08.08.2001
(73) Proprietor: Manner, D., Lee, Ontario P1B 8G4 (CA)
(72) Inventor: Manner, D., Lee, Ontario P1B 8G4 (CA)
(74) Representative: McKechnie, Neil Henry
(86) International application number: CA9900900
(87) International publication number: WO00023184

(56) References cited:
- WO-A-98/07804
- DE-A- 19 503 247
- US-A- 4 668 292
- US-A- 4 975 108
- US-A- 5 679 129
- US-A- 5 807 465

## Description

### FIELD OF THE INVENTION

The present invention relates to an absorbent and time release material. More specifically, the present invention relates to an absorbent and time release material that can be made from recyclable and waste materials and is environmentally friendly.

### BACKGROUND OF THE INVENTION

Absorbent materials have a number of uses, from absorbing liquids, such as oil in a spill, to retaining water in soil. Numerous sources and compositions exist for absorbent materials. Generally, they are specific to a single task, expensive or have limited absorptive properties. It is desired to have a substantially clean absorptive material that is inexpensive, safe, convenient to use, uses readily available materials, and can be used for a number of applications.

Time release materials can be used for a variety of purposes. Generally, a base matrix is impregnated with a chemical or other substance that is released over time into the environment. A typical time release material is time release fertilizer. A problem with current time release materials is that the matrix confers no benefit to the surrounding environment, and may, in fact, be toxic to the environment. It is, therefore, desirable to provide time release materials that use an environmentally friendly base matrix, preferably one manufactured from recycled materials.

U.S. Patent No. 4,975,108 discloses a process for preparing time release/absorbent materials. A pulp is dewatered and then flash dried. The product from this step is then sized and impregnated with a substance appropriate for the intended use, such as a fertilizer or alkali. However, it is difficult to maintain product uniformity when using this method.

### SUMMARY OF THE INVENTION

According to a first aspect of the present invention, there is provided method of manufacturing an absorbent and time release material comprising the steps of : providing a pulp from a fibrous material;
forming said pulp into a block;
drying said block in a controlled atmosphere;
impregnating said dried block with a preselected substance;
grinding said impregnated block to form a powdered material.

In a further aspect of the invention there is provided a material, manufactured in accordance with the method above, for recovering petroleum from a spill site.

In a further aspect of the invention there is provided a material, manufactured in accordance with the method above, where the preselected substance includes fertilizers or soil improving agents.

In a further aspect of the invention there is provided a material, manufactured in accordance with the method above, for stabilizing and binding soil.

In a further aspect of the invention there is provided a material, manufactured in accordance with the method above, for use as a traction agent.

In a further aspect of the invention there is provided a material, manufactured in accordance with the method above, impregnated with combustion suppressant substances or water, for combating fires.

In an aspect ofthe invention, said pulp may be materials such as cellulose or dried paper pulp, cloth, or pulp fibers.

In another aspect of the invention, the powdered material is formed into a preselected shape depending on its intended purpose and required absorptive and time release characteristics. The preselected shape will to a large extent depend on its intended purpose. Examples of suitable preselected shapes include pellets, granules, shavings and powder.

In a further aspect of the invention, a material is provided which further comprises waste material or recovery blends which are added to the pulp. Examples of such waste material include railway "ties", telephone poles, creosote, calcium oxalate, powdered coal, waste material from the forestry and pulp and paper industries, and sludge wastes from wastewater treatment plants.

In another aspect of the invention, natural waste products may be incorporated into the material. In particular, garden waste, including natural fibers such as leaves, pine needles, grass clippings and natural cloth fibers may be incorporated into the pulp or natural wastes produced from industrial processing, such as fish fat from fish processing plants, or animal fat from slaughter houses could be incorporated into the preselected substance.

In a further aspect of the present invention, there is provided a material including a petroleum product such as motor oil and grease blended with fat products including petroleum wax.

The preselected substance includes all fat sources, including oils. Generally the liquid oils are solidified by blending the oils with a denser fat source such as wax. However, the liquid oils may be used without solidifying them. A liquid oil will be absorbed by a wood/paper fiber dried pulp.

Impregnating said preselected substance into said dried block includes, among other things, coating, saturating, covering, permeating and any other means of combining the substance with the dried block to achieve an absorbent and time release material once ground.

### DETAILED DESCRIPTION OF THE INVENTION

The present invention is generally directed to an absorbent and time release material formed from a fibrous pulp of recyclable or waste products that can then be impregnated with a variety of substances, such as oils, fats, waxes, and chemical additives.

In a preferred embodiment, the absorbent and time release material is manufactured in the following manner. A pulp is formed from paper which is soaked in water and coarsely macerated. The resulting paper pulp is then pressed into a block and dried. The block can have any desired shape, and its size will depend primarily on the drying facilities available. Generally, a conventional oven is used to dry the block. Typically, the block is dried until it has a residual moisture content in the range of 0 - 15 %.

Due to the fibrous nature of the original pulp, and the forming process used to form the block, the resulting dried has a porous character capable of being impregnated with a number of substances. As used herein, impregnated means, among other things, coated, saturated, covered, permeated and any other method of combining the substance with the dried block to achieve an absorbent material once ground.

In a preferred embodiment, the dried, formed block is immersed into liquid paraffin wax or beeswax. The block absorbs the liquefied wax until it is saturated and then the impregnated block is removed from the liquefied wax and set aside to allow the wax to solidify.

Once solidified, the block is generally ground to form the absorbent and time release material. Grinding, as used herein, encompasses any suitable method of reducing the block to a particulate form. The methods contemplated include shaving, grinding, and sawing. The resultant particulate form of the absorbent material can be a fine or coarse powder, shavings, sawdust or other resultant form.

In one embodiment, the block comprises cellulose fibers. Specifically, the block comprises paper pulp which has been formed into the desired shape and dried. It has been found that the selection of the paper pulp influences the absorptive qualities of the absorbent material. Other suitable pulp materials include cloth, ground coal or charcoal .

Pulps used include coarse paper and fine paper pulps. The relatively course paper employed in egg crates has been tested. The course paper used in egg crates is essentially any over-processed wood fiber or short fiber like Krofta Fines, which are expelled during the manufacturing process of wood fibers to achieve fluff pulp. Fluff pulp is used in environmentally friendly diapers and feminine napkins. Because there is a portion of the wood fiber which becomes too short through breakage in manufacturing to be utilized in the machinery used to manufacture fluff pulp, it is dropped from the process as waste. In another test, finer paper, newsprint, was used. Newsprint is a finer paper because the wood strand is long and is still considered to be a quality material.

The impregnating substance preferably comprises a wax, such as paraffin wax or beeswax, although other waxes and wax-like substances such as animal or vegetable fats or shortening may also be employed, if desired.

Other embodiments of the absorbent material have also been tested with favorable results, including blocks comprising leaves, needles, bark, any plant and animal fiber, hair, fur, ground bone, grass, cloth, leather, chaff from grain farming and processing, hay, straw, dust, lint, coal powder and steel wool. Impregnating substances which have been tested have comprising beeswax, all waxes including paraffin and petroleum waxes, all fats and oils from all sources including canola, soya, lard, vegetable or animal plus petroleum oils and greases. It is not necessary to use wax to blend and solidify the oils but it is preferred to allow for cleaner handling of the materials. Generally, the preference is to use a 50% blend of wax with a secondary substance chosen.

All of the above embodiments exemplified can also contain waste materials or recovery blends. A recovery blend is any material which would be potentially toxic if eaten, potentially toxic to the environment and/or are considered waste materials. For example, a clean fiber such as recycled non-toxic paper that has only been exposed to vegetable dyes is a natural blend not a recovery blend. Recovery blends include any material which may not be safe. In the case of cloth fiber, this material would not be considered a recovery blend if natural plant fiber was processed into the carrier and there were no toxic dyes in its composition. On the other hand, colored or chemically treated cloth fibers may be recovered efficiently by the process but could not be considered non-toxic prior to combustion and therefore are a recovery blend.

The recovery blends can be incorporated into the pulp or the impregnating substance. The general rule is that any material that can be blended with the oil or liquid wax and will pass thought the surface of the block is introduced into the impregnating substance saturation process and the others are introduced into make up of the pulp. The waste material can be processed into a powder and then blended with the wood/paper pulp. The blend is then pressed into the preselected shape to form the block, as discussed above.

In a further alternative, the waste material can itself form the block without a further fiber carrier. In this latter process, the waste material would be powdered and pressed into the appropriate shape.

Waste materials which have been employed include creosoted railway ties and telephone poles, creosote, powdered coal, calcium oxalate solids, krofta fines, bark, wood/paper and ink waste stream material from recycled paper industry. In addition waste sludge from waste water treatment plants may also be appropriate material to include in the block.

Waste materials that are not detrimental to the environment but are often placed in household waste can be incorporated into the block, including garden waste, leaves, pine needles, grass clippings and natural cloth fibers. In addition certain, natural wastes created in industrial processing, such as fish processing plants which produce fish fat as waste, or slaughter houses which produce animal fat as waste, can be incorporated into the absorbent material of the invention.

The following examples are further illustrations of particular embodiments of the absorbent material of the invention or processes for producing such embodiments.

### Example I - Petroleum Recovery

In a first embodiment, the absorbent material of the present invention, manufactured as described above is ground in to a relatively fine powder, termed flash powder. The flash powder can be used in its powdered form, or can be pressed into pellets. The flash powder can be used to absorb oil and petroleum products from an oil spill, both on water and on land.

Flash powder is produced by grinding the processed fiber and wax/fax block to a powder. There are two methods to achieve a pellet. First the flash powder can be compressed into a pellet, or the basic methods of producing may simply be processed into a small unit so that the individual pieces of produced are the size desired for the pellet.

The powdered form is the most efficient form of the material to recoverpetroleum spills. Once the material has been processed to the desired powder or pellet, it can then be introduced to the toxic spill where the flash powder incorporates the petroleum into the powder and holds the petroleum in a solid state for recovery.

Once the petroleum contaminated flash powder/pellets have been recovered from the spill site it is easily recovered as petroleum in any of several methods. The petroleum-laden product can be diluted with a secondary petroleum product and passed through a screen filtration to remove the fiber. Alternatively, the contaminated flash powder can be warmed and passed through a warmed screen to filter the fiber.

In a particular embodiment of the invention, the flash powder can be introduced to a waste material such as an oil spill and when lit, the flash powder together with the oil is combusted. The combustion can be effected on a spill on water and the flash powder will not absorb the water, but will immediately absorb the oil.

Alternatively, once the oil has been absorbed, the oil laden flash powder, which continues to remain buoyant, can easily be removed from the water for transport to a remote location and combusted there or can be combusted on the surface of the water and the material remains after the burn is solid and wax-like and is easily removed form the water's surface and continues to remain buoyant. The emissions from the combustion are minimized due to the efficient combustion characteristics of the flash powder, as described in the inventors co-pending patent application, Canadian Patent Application No. 2,250,339.

### Example 2 - Soil Stabilization and Fertilization

The absorbent material of the present invention can also be used as a soil stabilizer or fertilizer. By adding soil balancing chemicals, fertilizers and/or varying the source of the fiber, an excellent material for farming, gardening and land reclamation product is produced.

Generally, hydrocarbons, such as wax, are used as the main impregnating substance. It is believed that these substances permit a time release characteristic as well as exhibiting a binding effect when blended with sand or dry soil. This permits the slow release of desired chemical agents to the treated soil and aids in soil stabilization.

The absorbent qualities of the material also help to retain water in the soil and permit its use in land reclamation and farming.

### Example 3 - Traction Agent

The time release material of the present invention can be used as a traction agent for improved traction on wet or iced road surfaces.

The time release material is manufactured as described above, and can incorporate additional substances into the pulp or impregnating substance. For example, salt can be added to the water saturation of the production line and this will aid in melting ice and snow. The fat/wax impregnating substance permits a time release ofthe incorporated additional substances, but the material can work effectively without the addition of fat, wax or oil.

Equally, any abrasive, such as charcoal or sand, can be included in the manufacture to increase the traction properties.

### Example 4 - Fire Suppressant and Water Retention Product

The absorbent material of the present invention can be used as a fire suppressant and water retention aid.

Generally, the pulp used for this product is formed of wood fibers. The processing of the wood fiber used of the pulp is the key to this product. Any pulp additive that cause the wet processed wood fiber to "congeal" can be employed. Additionally, chemicals agents that suppress combustion, such as bio sands, clay, or sodium bicarbonate, can be incorporated into the pulp or impregnating substance. The manufacturing process can incorporate any natural fiber including fluff pulp, a derivative of wood, used in diapers and feminine products, that absorbs substantial moisture and holds that moisture. The manufacture may or may not include fat, wax, or oils used as the impregnating substance.

The more processed the wood fiber is the more absorbent the fiber becomes and the more absorbent the fiber becomes the greater the amount of water which will be retained in the porous carrier. This will result in an absorbent material ideal for fire suppression.

When thus prepared, the absorbent material of this embodiment can be used to controlling or suppress fires, and protect structures threatened by fire. The absorbent material has the property of retaining water. When used in a fire situation, the material smothers or wets the fire. When the material is voided of moisture, when reaching high temperatures, the processed fiber naturally inhibits combustion and will tend to produce flame-suppressing smoke that is believed to rob the fire of oxygen.

When this embodiment is used for land reclamation, specifically in dry or desert areas, the product will hold moisture in the soil, creating a stability in the soil and retaining moisture as it is introduced to the treated soil over time. The material holds the humidity in place and effects a maximum benefit of that moisture for farming purposes and plant growth.

### Example 5 - Absorbent Material comprising Wood Fiber Fluff using a Steam Process

Dry wood/paper pulp can be ground or finely shredded to wood fiber fluff. The resulting wood fiber fluff can b compressed to the desired shape and then steam can be forced into the compressed fluff form. The steam causes the wood fibers to bind together and in this manner the block form is achieved. The advantage of this process is a greatly reduced drying time is required to form the block prior to saturation with the chosen impregnating substance. It is understood that a similar method is employed in some processes for making particular types of fiber containers, including egg cartons. Grinding is then effected as above.

### Example 6 - Absorbent Material comprising a Porous Carrier obtained from a Sheet Layering Process

The block can also be formed by taking thin sheets of porous wood fiber, such as balsa wood, or sheets of paper or cardboard and layering these sheets to the desired thickness and then using any method desired to apply even pressure. This pressure need only be great enough to secure continuous contact between each layer of fiber sheets. The block can then be introduced to the liquefied impregnating substance until the fiber is completely saturated. The resulting block is then be removed from the fuel and allowed to solidify, if it was to be a solid fuel, before, the chosen method of compression would be removed. Grinding is then effected as above.

### Example 7 - Production of Pellets using Dry Heat Compression

Dry heat compression can be used to bond two or more different materials using a powdered absorbent material. The impregnating substance in the powder acts as a bonding agent. For example, dry powdered tree bark blended with flash powder to form a pellet. The flash powder is blended with the desired amount of powdered bark. This bark/flash powder blend is then compressed into a heated metal or stone form, at temperatures generally from 200 to 400 degrees Fahrenheit, which form represents the desired shape and size of a block according to the present invention. Very quickly the fuel components in the flash powder liquefy and while liquefied and under pressure, quickly penetrate the bark powder. The form or pellet is then expelled from the heated form and cooled to solidify the material into a solid unit such as a pellet, or ground to form a powder.

The dry heat compression is the most desirable method of manufacturing pellets, which are approximately 1-2 cm in thickness and 1 and ½ cm in length. It should be noted that pellets may be manufactured from other materials other than bark, including calcium oxalate solids.

The above mentioned methods of production may also be combined. One could use flash powder, dry wood/paper fiber fluff and dry heat compression to achieve the desired form. In another process, steam heat compression could be used to create a form using a blend of wood/paper fiber fluff and powdered bark. In another process, layered sheets of paper or porous wood fiber could be compressed using pressure and steam and then allowing this material to dry while pressure is continued. Once dried it is saturated with the chosen impregnating substance. These are alternative process in addition to the wet fiber compression method early described.

The above-described embodiments of the invention are intended to be examples of the present invention and alterations and modifications may be effected thereto, by those of skill in the art, without departing from the scope of the invention which is defined solely by the claims appended hereto.

## Claims

1. A method of manufacturing an absorbent and time release material comprising the steps of:
providing a pulp from a fibrous material;
forming said pulp into a block;
drying said block in a controlled atmosphere;
impregnating said dried block with a preselected substance;
grinding said impregnated block to form a powdered material.

2. A method according to claim 1, wherein said pulp comprises cloth fibers.

3. A method according to claim 1, wherein said pulp comprises cellulose fibers.

4. A method according to claim 3, wherein said cellulose fibers are dried paper pulp.

5. A method according to claim 3, wherein said cellulose fibers are short strand wood fibers.

6. A method according to claim 3, wherein said cellulose fibers are long strand wood fibers.

7. A method according to claim 3, wherein said cellulose fibers are wood fibers from the processing of wood fiber fluff.

8. A method according to claim 1, wherein said substance is selected from the group comprising paraffin wax, beeswax, wax derived from animal products and wax derived from vegetable products.

9. A method according to claim 1, wherein said substance is selected from the group comprising petroleum wax, motor oil and grease.

10. A method according to claim 1, wherein said pulp includes powdered material selected from one or more of the following waste material: railway ties, telephone poles, creosote, powdered coal, calcium oxalate-solids, krofta fines, or bark.

11. An absorbent and time release material produced according to any of the methods as claimed in any of claims 1 to 10.

12. Use of the material as claimed in claim 11 for suppressing fires.

13. Use of the material as claimed in claim 11 for land reclamation.

14. Use of the material as claimed in claim 11 for soil enhancement.

15. Use of the material as claimed in claim 11 for use as a traction agent.

16. Use of the material as claimed in claim 11 to recover petroleum products resulting from a spill.

## Patentansprüche

1. Verfahren zur Herstellung eines Absorptionsmittels mit verzögerter Abgabe, umfassend die folgenden Schritte:
Bereitstellen eines Breies aus einem Faserstoff,
Formen des genannten Breies zu einem Block,
Trocknen des genannten Blocks in einer kontrollierten Atmosphäre,
Imprägnieren des genannten getrockneten Blocks mit einer vorausgewählten Substanz,
Zerkleinern des genannten imprägnierten Blocks zum Bilden eines Pulverstoffes.

2. Verfahren nach Anspruch 1, bei dem der genannte Brei Stofffasern umfasst.

3. Verfahren nach Anspruch 1, bei dem der genannte Brei Zellulosefasern umfasst.

4. Verfahren nach Anspruch 3, bei dem die genannten Zellulosefasern getrockneter Zellstoff sind.

5. Verfahren nach Anspruch 3, bei dem die genannten Zellulosefasern kurzspänige Holzfasern sind.

6. Verfahren nach Anspruch 3, bei dem die genannten Zellulosefasern langspänige Holzfasern sind.

7. Verfahren nach Anspruch 3, bei dem die genannten Zellulosefasern Holzfasern aus der Verarbeitung von Holzfaserstaub sind.

8. Verfahren nach Anspruch 1, bei dem die genannte Substanz aus der Gruppe ausgewählt wird, die Hartparaffin, Bienenwachs, von tierischen Erzeugnissen abgeleitetes Wachs und von pflanzlichen Erzeugnissen abgeleitetes Wachs umfasst.

9. Verfahren nach Anspruch 1, bei dem die genannte Substanz aus der Gruppe ausgewählt wird, die Mineralölparaffin, Motoröl und Schmierfett umfasst.

10. Verfahren nach Anspruch 1, bei dem der genannte Brei pulverisiertes Material aufweist, das aus einem oder mehreren der folgenden Abfallstoffe ausgewählt wird:
Eisenbahnschwellen, Telefonmasten, Kreosot, Kohlenstaub, Kalziumoxalat-Feststoffe, Krofta-Feinstoff oder Rinde.

11. Absorptionsmittel mit verzögerter Abgabe, das gemäß einem der Verfahren nach einem der Ansprüche 1 bis 10 hergestellt wurde.

12. Verwendung des Materials nach Anspruch 11 zum Unterdrücken von Bränden.

13. Verwendung des Materials nach Anspruch 11 zur Landgewinnung.

14. Verwendung des Materials nach Anspruch 11 zur Bodenverbesserung.

15. Verwendung des Materials nach Anspruch 11 zur Verwendung als Antischlupfmittel.

16. Verwendung des Materials nach Anspruch 11 zur Rückgewinnung von aus einer Verschüttung resultierenden Erdölprodukten.

## Revendications

1. Procédé de fabrication d'un matériau absorbant et à libération dans le temps comprenant les étapes visant à :
fournir une pâte à partir d'un matériau fibreux ;
former ladite pâte en un bloc ;
sécher ledit bloc sous atmosphère contrôlée ;
imprégner ledit bloc séché d'une substance prédéterminée, et
broyer ledit bloc imprégné pour former un matériau en poudre.

2. Procédé suivant la revendication 1, dans lequel ladite pâte comprend des fibres de tissu.

3. Procédé suivant la revendication 1, dans lequel ladite pâte comprend des fibres de cellulose.

4. Procédé suivant la revendication 3, dans lequel lesdites fibres de cellulose sont de la pâte à papier séchée.

5. Procédé suivant la revendication 3, dans lequel lesdites fibres de cellulose sont des fibres de bois courtes.

6. Procédé suivant la revendication 3, dans lequel lesdites fibres de cellulose sont des fibres de bois longues.

7. Procédé suivant la revendication 3, dans lequel lesdites fibres de cellulose sont des fibres de bois issues du traitement de bourre de fibres de bois.

8. Procédé suivant la revendication 1, dans lequel ladite substance est choisie parmi le groupe comprenant la cire de paraffine, la cire d'abeilles, la cire dérivée de produits animaliers et la cire dérivée de produits végétaux.

9. Procédé suivant la revendication 1, dans lequel ladite substance est choisie parmi le groupe comprenant la cire de pétrole, l'huile de moteur et la graisse.

10. Procédé suivant la revendication 1, dans lequel ladite pâte comprend un matériau en poudre choisi parmi un ou plusieurs des déchets suivants : des traverses de chemin de fer, des poteaux de téléphone, de la créosote, du charbon pulvérisé, des solides à oxalate de calcium, des fines Krofta ou de l'écorce.

11. Matériau absorbant et à libération dans le temps produit suivant l'un quelconque des procédés suivant l'une quelconque des revendications 1 à 10.

12. Utilisation du matériau suivant la revendication 11 pour étouffer les incendies.

13. Utilisation du matériau suivant la revendication 11 pour la mise en valeur des terres.

14. Utilisation du matériau suivant la revendication 11 pour l'enrichissement des sols.

15. Utilisation du matériau suivant la revendication 11 comme agent d'adhérence.

16. Utilisation du matériau suivant la revendication 11 pour récupérer les produits pétroliers résultant d'un déversement accidentel.
